Europäisches Patentamt

European Patent Office

Office européen des brevets

(19)

(11) EP 0 813 077 A2

(12) EUROPEAN PATENT APPLICATION

(43) Date of publication:
17.12.1997 Bulletin 1997/51

(51) Int Cl.6: G02B 1/04, G02B 6/12

(21) Application number: 97304031.4

(22) Date of filing: 10.06.1997

(84) Designated Contracting States:
AT BE CH DE DK ES FI FR GB GR IE IT LI LU MC
NL PT SE

(30) Priority: 10.06.1996 JP 147221/96

(71) Applicant: MITSUBISHI GAS CHEMICAL
COMPANY, INC.
Tokyo, 100 (JP)

(72) Inventors:
• Ohba, Michio,
c/o Mitsubishi Gas Chem. Comp., Inc.
Katsushika-ku, Tokyo 125 (JP)
• Kawabata, Yasunari,
Mitsubishi Gas Chem. Co., Inc.
Katsushika-ku, Tokyo 125 (JP)

(74) Representative: Jenkins, Peter David et al
PAGE WHITE & FARRER
54 Doughty Street
London WC1N 2LS (GB)

(54) Integrated optical waveguide and method for manufacturing same

(57) An integrated optical waveguide is obtained by forming a plurality of independent optical waveguides within a single optically-transparent flat plate, markedly reducing crosstalk.

In the integrated optical waveguide obtained by forming a plurality of independent optical waveguides within a single optically-transparent flat plate, dummy optical waveguides are provided between individual adjacent optical waveguides.

An integrated optical waveguide having an isolation of 30 dB or higher is obtained.

## FIG.1(a)

EP 0 813 077 A2

# FIG.1(b)

# FIG.1(c)

# FIG.1(d)

## Description

The present invention relates to an optical waveguide for use in an optical coupler or other optical component, and more particularly to reducing crosstalk in an integrated optical waveguide obtained by forming a plurality of optical waveguides within a single optically-transparent flat plate.

Optical couplers, optical star couplers, optical modules, and other optical components are indispensable for optical LANs, optical communication, optical measurement and control, and other fields, and the rapid increase in the scope of their application occurring in recent years has been created demand for achieving better performance with smaller devices. Optical waveguides are used for these optical components in order to branch or combine optical signals or to achieve coupling with LDs, LEDs, PDs, and other light-emitting or light-receiving elements. A distinctive feature of an optical waveguide is that it comprises a highly refractive core portion that transmits light and a weakly refractive cladding portion that envelopes the core, and that a product suitable for achieving the intended purpose can be obtained by selecting optimum design for the optical circuit patterns of the core and cladding.

Attempts have recently been made to use large-scale fiber connections as the optical fiber connections used to perform optical communication between large numbers of computers, as the optical fiber connections installed in optical switches, and the like. Optical components featuring optical waveguides such as those described above can also be used in such applications, but when conventional components are used, large numbers of optical components are needed, and the number of optical fiber connections can be very high, requiring considerable space for accommodating the optical components or optical fiber connections, and considerable labor for performing connecting operations.

In view of this, the issue is how to make it easier to fit a wiring system into a narrower space, but mere miniaturization of individual optical components is not sufficient to achieve this goal, and uniting a plurality of optical components into an integral whole becomes indispensable.

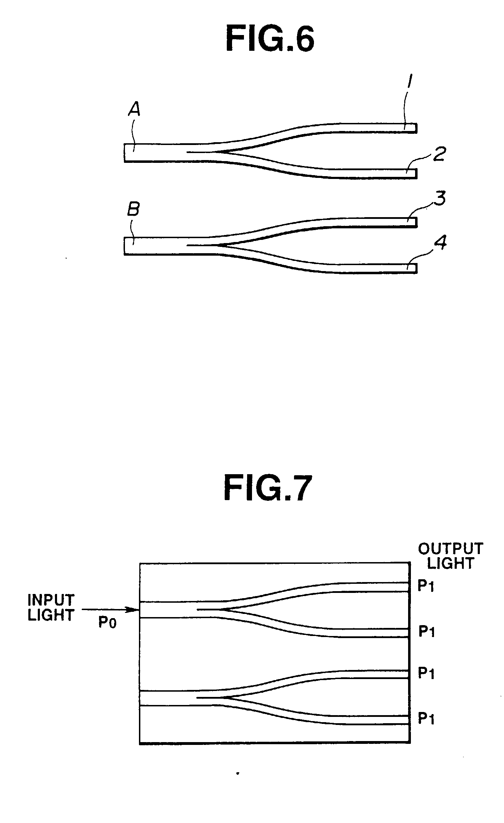

Waveguide-type optical components can be deemed suitable for achieving this goal because a plurality of optical waveguides of desired dimensions can be easily formed within a single optically-transparent flat plate. Fig. 7 depicts an example of such an integrated optical waveguide, that is, an optical waveguide obtained by providing a single optically-transparent flat plate with two systems of bifurcated optical waveguides.

An integrated optical waveguide obtained by forming a plurality of individual optical waveguides within a single optically-transparent flat plate is disadvantageous, however, in that light leakage from an optical waveguide to adjacent optical waveguides reaches proportions that cannot be ignored, that is, considerable crosstalk exists between adjacent optical waveguides.

In the present invention, the level of crosstalk is expressed as isolation (dB), which is defined in the following manner.

$$\text{Isolation (dB)} = -10 \times \log(P_j/P_i),$$

where $P_i$ is the intensity of the output light at the intended port, and $P_j$ is the intensity of the output light at an unintended port. For example, $P_i$ and $P_j$ will correspond to the intensity of the input light $P_O$ as shown in Fig. 7 in an integrated optical waveguide equipped with two systems of the bifurcated optical waveguides shown in Fig. 7.

The terms "high level of crosstalk" and "low level of isolation" will therefore have the same meaning.

The isolation of an integrated optical waveguide, while varying with the distance between adjacent optical waveguides or the like, is usually about 10 to 20 dB (1/10 to 1/100). When considerable crosstalk exists, optical signals travel to unintended sites, increasing the likelihood that the system will malfunction. Although the permissible level of crosstalk varies with the intended goal and cannot be defined unconditionally, isolation should be 20 dB or higher, and preferably 30 dB or higher, in order to obtain a highly reliable optical wiring system.

As a result of painstaking research aimed at addressing these problems, the inventors devised the present invention upon performing additional research and discovering that providing dummy optical waveguides between adjacent optical waveguides allows the dummy optical waveguides to block light leakage and to substantially prevent transmission from the dummies to the adjacent optical waveguides located farther away, making it possible to markedly reduce crosstalk.

Specifically, the present invention resides in an integrated optical waveguide obtained by forming a plurality of individual optical waveguides within a single optically-transparent flat plate, wherein this optical waveguide is obtained by providing dummy optical waveguides between individual adjacent optical waveguides to reduce crosstalk between these adjacent optical waveguides.

The present invention also resides in an integrated optical waveguide obtained by providing 1 to 4 such dummy optical waveguides between individual adjacent optical waveguides, and also in a method for manufacturing an optical waveguide by a process in which an optically-transparent polymer film containing a photopolymerizable monomer is exposed to light through a photomask equipped with an optical circuit pattern, the photopolymerizable monomer in the

EP 0 813 077 A2

exposed portions is polymerized, and the unreacted monomer is then removed by drying, yielding an optical circuit, wherein the best mode of embodying the method for manufacturing an integrated optical waveguide equipped with such dummy optical waveguides is a method for manufacturing an integrated optical waveguide in which a photomask equipped with an integrated optical waveguide pattern having the dummy optical waveguide is used as the aforementioned photomask.

Embodiments of the present invention will now be described by way of example only, with reference to the accompanying drawings, in which:

Fig. 1 is a plan view depicting an example of an integrated optical waveguide equipped with the dummy optical waveguide of the present invention;

Fig. 2 is a plan view of the quartz photomask pattern used for manufacturing the optical waveguide of the first embodiment of the present invention;

Fig. 3 is the plan view of the quartz photomask pattern used for manufacturing the optical waveguide of the second embodiment of the present invention;

Fig. 4 is a plan view of the quartz photomask pattern used for manufacturing the optical waveguide of the third embodiment of the present invention;

Fig. 5 is a plan view of the quartz photomask pattern used for manufacturing the optical waveguide of the fourth embodiment of the present invention;

Fig. 6 is a plan view of the quartz photomask pattern used for manufacturing the reference optical waveguide of the present invention;

Fig. 7 is a plan view depicting an example of an integrated optical waveguide; and

Fig. 8 is a diagram depicting the flow of the method for manufacturing a polymer optical waveguide by selective photopolymerization.

The present invention will now be described in detail.

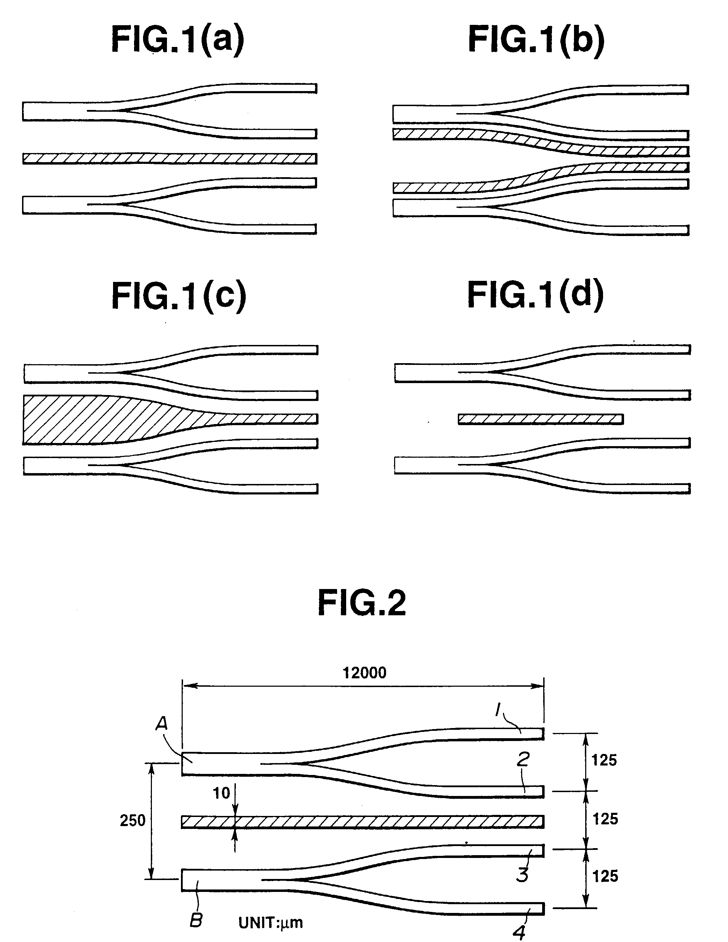

Figs 1a, 1b, 1c, and 1d depict examples of integrated optical waveguides equipped with variants of the dummy optical waveguide of the present invention. The hatched portions in the drawings correspond to dummy optical waveguides.

The dummy optical waveguide is not limited in any way in terms of width and shape as long as it is capable of functioning as an optical waveguide. When, for example, the width is about 5 to 500 μm, it is not at all necessary to make this width uniform, and, in terms of shape, the optical waveguide may run in a straight line in the transmission direction, may have the same shape as, and run parallel to, the adjacent independent optical waveguides, or may have any other desired shape.

As far as the crosswise location site of the dummy optical waveguide is concerned, the purpose of providing the dummy optical waveguide is to block light leakage, so any site may be selected as long as it is between the adjacent optical waveguides, irrespective of whether the site is shifted toward one optical waveguide or is located exactly in the middle. As far as the location site in the transmission direction is concerned, the maximum effect is obtained when the entire area of the optical waveguide is covered, but covering a partial area is also permissible, as shown in Fig. 1d.

Although considerable effect can be achieved with a single dummy optical waveguide, increasing the number of waveguides further enhances the blocking effect. About 1 to 4 waveguides can often provide an isolation of about 25 to 35 dB, depending on the permissible level of crosstalk, so using 1 to 4 waveguides appears to be sufficient for practical purposes. Fig. 1b depicts an example of two dummy optical waveguides.

Although the optical waveguides used in the integrated optical waveguide of the present invention are not limited in any way in terms of manufacturing methods or materials for the optical waveguides, a method for manufacturing a polymer optical waveguide by selective photopolymerization (Japanese Patent Publication 56-3522) in which an optically-transparent polymer film containing a photopolymerizable monomer is exposed to light through a photomask equipped with an optical circuit pattern, the photopolymerizable monomer in the exposed portions is polymerized, and the unreacted monomer is then removed by drying to form an optical circuit makes it possible to facilitate manufacture by using as the aforementioned photomask a photomask equipped with an integrated optical waveguide pattern having the aforementioned dummy optical waveguide.

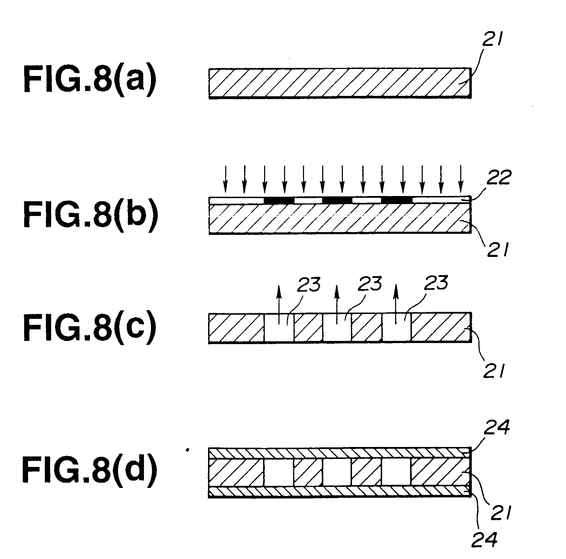

An example of such a selective photopolymerization technique is depicted in Fig. 8.

4

The technique comprises a first step (Fig. 8a) in which an optically-transparent polymer film 21 containing a photopolymerizable monomer is fabricated by casting through the use of an optically-transparent polymer solution containing prescribed amounts of a photopolymerizable monomer and a sensitizer, a second step (Fig. 8b) in which the film 21 is covered with a photomask 22 and exposed to light to polymerize the photopolymerizable monomer in the exposed portions, a third step (Fig. 8c) in which the unreacted monomer 23 is removed by vacuum drying, and a fourth step (Fig. 8d) in which cladding layers 24 are formed on the front and back surfaces of the resulting film 21. In this manufacturing method, the cladding layers 24 formed on the front and back surfaces of the film 21 may double as the adhesives used to fix the film when an optical circuit plate is manufactured by reinforcing an optical circuit film with two substrates.

The above-described selective photopolymerization technique is characterized in that an optimal polymer optical circuit that matches the numerical aperture (NA) or size of an optical fiber can be easily manufactured by adjusting the type or concentration of the photopolymerizable monomer, and is thus advantageous in that the circuit pattern of a photomask accurately manufactured can be transferred to a polymer film with high precision and a satisfactory yield by means of an inexpensive manufacturing apparatus. In view of this, selective photopolymerization yields the best results when used with the method for manufacturing the integrated optical waveguide of the present invention.

The present invention will now be described in further detail with reference to embodiments. The embodiments described below merely serve as specific illustrations and do not limit the mode of implementation or the scope of the present invention.

Embodiment 1

(1) Design and Manufacture of Photomask

An optical circuit in which a single dummy optical waveguide was provided between the adjacent individual optical waveguides depicted in Fig. 2 was used as an integrated optical circuit provided with two systems of bifurcated circuits for a GI optical fiber with a core diameter of 62.5 μm and a cladding diameter of 125 μm (hereinafter abbreviated as 62.5/125), and a quartz photomask was manufactured. The dummy optical waveguide had a constant width of 10 μm and ran in a straight line along the exact middle between the adjacent optical waveguides.

The optical circuit had the following dimensions: the length was 12 mm, the pitch of all the end portions of the optical waveguide on the bifurcated side was 125 μm, and the pitch on the united side was 250 μm.

(2) Manufacture of Optical Waveguide Film

The optical waveguide film was manufactured by the selective photopolymerization technique described in Japanese Patent Publication 56-3522. Specifically, a film was fabricated from a polycarbonate (registered trade name: IUPILON Z; manufactured by Mitsubishi Gas Chemical Company) that had been synthesized from bisphenol Z and that contained methyl acrylate as a photopolymerizable monomer and benzoin ethyl ether as a photopolymerization initiator, and the resulting film was covered with the photomask manufactured in (1) above and was exposed to ultraviolet light in accordance with a common technique to polymerize the methyl acrylate monomer in the exposed portions. The methyl acrylate monomer contained in unexposed portions was subsequently removed by vacuum drying, yielding a polymer film with a thickness of 50 μm in which the unexposed portions consisted of a single phase of polycarbonate, and the exposed portions of a mixed phase of polycarbonate and methyl acrylate polymer.

(3) Manufacture of Optical Circuit Component

The film with an optical waveguide was sandwiched between two glass plates by employing an adhesive that doubled as upper and lower cladding layers and that had an index of refraction of 1.57, yielding an optical waveguide component. Both ends were then polished, insertion loss was measured in the manner described below, and isolation was calculated.

(4) Measurement of Insertion Loss, Calculation of Isolation

The optical input/output ports on the end faces of the resulting integrated optical waveguide were designated A and B on the united side, and 1, 2, 3, and 4 on the bifurcated side, as shown in Fig. 2. A 62.5/125 GI optical fiber was connected to port A on the united side of the bifurcated optical circuit, light was emitted from an LED light source with a wavelength of 0.85 μm, light exiting from ports 1, 2, 3, and 4 on the branching side of the optical circuit was successively directed to an optical power meter using the same optical fiber, and respective output light intensities were measured.

In addition, light from the LED was guided directly into the power meter with the aid of the same optical fiber without being passed through the optical circuit, the light intensity was measured, and the measured value was adopted as the intensity of light entering the optical circuit. Based on these measurements, insertion loss was determined for each of the ports 1, 2, 3, and 4 with the aid of the following equation.

$$\text{Insertion loss (dB)} = -10 \times \log (\text{Output light intensity} / \text{Input light intensity})$$

In these measurements, light emitted by ports 3 and 4 (unintended ports) was the crosstalk; and isolation, which was a measure of this crosstalk, was calculated as a difference (dB) between the lower value of the insertion loss at ports 3 and 4 and the higher value of insertion loss at ports 1 and 2 (intended ports).

Similarly, insertion loss was determined at ports 1 and 2 (unintended ports) and at ports 3 and 4 (intended ports) for the connection to port B, and isolation was calculated in the same manner. The results are shown in Table 1.

(All the isolation numerical values cited in the table below have been calculated as combinations obtained by minimizing the difference in insertion loss between unintended and intended ports.)

Table 1

|  |  |  | Light input A | Light input B |
|---|---|---|---|---|
| Insertion loss | Optical output 1 |  | *3.52 | 34.20 |
|  | 2 |  | 3.52 | *34.01 |
|  | 3 |  | *34.13 | *3.53 |
|  | 4 |  | 34.27 | 3.53 |
| Isolation |  |  | 30.61 | 30.48 |
| Note: Asterisks indicate data used for calculating isolation (unit: dB) | | | | |

Practical Examples 2 and 3

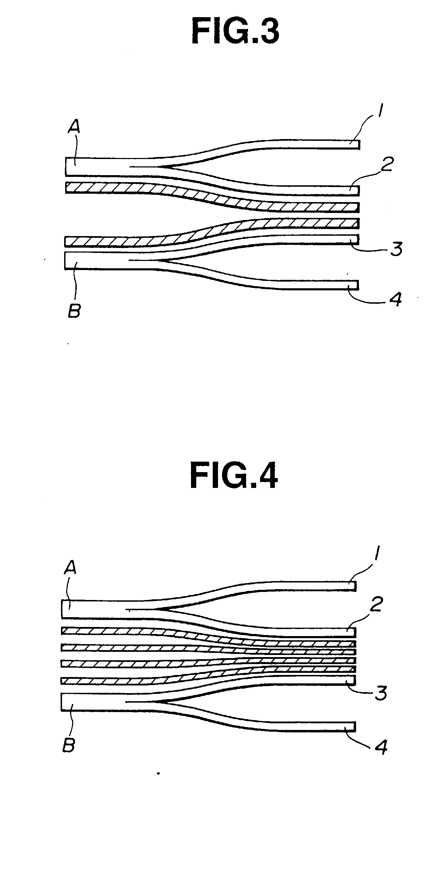

Optical circuits having two (Embodiment 2) and four (Embodiment 3) dummy optical waveguides, as shown in Figs. 3 and 4, respectively, were designed as optical circuits obtained by integrating two systems of bifurcated circuits for a 62.5/125 GI optical fiber; quartz photomasks were manufactured; optical circuits were manufactured and insertion losses measured by the same method as in Practical Example 1; and isolation was calculated. The dummy optical waveguides had a width of 5 μm and were shaped as components that ran parallel to the independent optical waveguides. The results are shown in Table 2.

Table 2

|  |  | Practical Example 2 dummies | | Practical Example 3 dummies | |
|---|---|---|---|---|---|
|  |  | Light input A | Light input B | Light input A | Light input B |
| Insertion loss | Optical output 1 | *3.54 | *37.92 | *3.51 | *39.08 |
|  | 2 | 3.54 | 38.86 | 3.51 | 39.80 |
|  | 3 | 38.15 | *3.64 | 38.69 | 3.52 |
|  | 4 | *37.41 | 3.64 | *37.97 | *3.54 |
| Isolation |  | 33.87 | 34.28 | 34.46 | 35.56 |
| Note: Asterisks indicate data used for calculating isolation (unit: dB) | | | | | |

Reference Example 1

An optical circuit obtained by dispensing with the dummy optical waveguide in Fig. 2, as shown in Fig. 6, was designed as an optical circuit obtained by integrating two systems of bifurcated circuits for a 62.5/125 GI optical fiber; a quartz photomask was manufactured; an optical circuit was manufactured and insertion loss measured by the same method as in Practical Example 1; and isolation was calculated. The results are shown in Table 3.

Table 3

| | | Light input A | Light input B |
|---|---|---|---|
| Insertion loss | Optical output 1 | *3.52 | *21.68 |
| | 2 | 3.52 | 21.85 |
| | 3 | 22.86 | *3.53 |
| | 4 | *22.15 | 3.53 |
| Isolation | | 18.63 | 18.15 |
| Note: Asterisks indicate data used for calculating isolation (unit: dB) | | | |

Embodiment 4

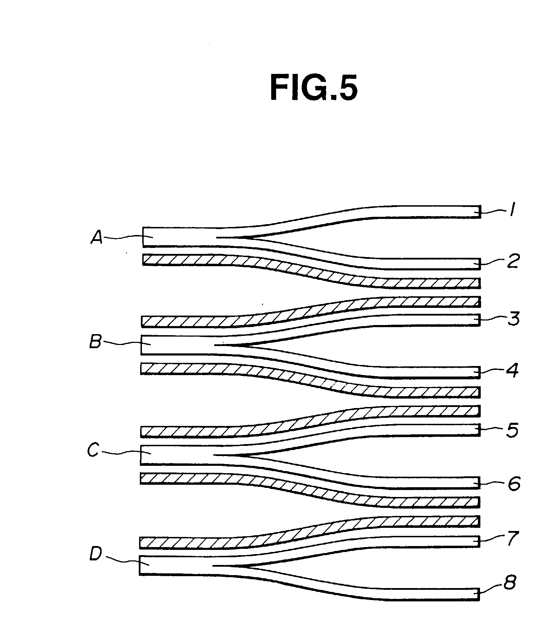

An optical circuit in which two dummy optical waveguides were provided between each pair of independent adjacent optical waveguides, as shown in Fig. 5, was designed as an optical circuit obtained by integrating four systems of bifurcated circuits for a 62.5/125 GI optical fiber; a quartz photomask was manufactured; an optical circuit was manufactured and insertion loss measured by the same method as in Practical Example 1; and isolation was calculated. The shape of each optical waveguide and dummy optical waveguide was the same as in Fig. 3.

The optical input/output ports were designated as A, B, C, and D, respectively, on the united side and as 1, 2, 3, 4, 5, 6, 7, and 8, respectively, on the bifurcated side, as shown in Fig. 5. The results are shown in Table 4.

Table 4

| | | Light input A | Light input B | Light input C | Light input D |
|---|---|---|---|---|---|
| Insertion loss | Optical output 1 | *3.57 | 38.97 | 48.32 | >60 |
| | 2 | 3.57 | 38.85 | 47.79 | 56.21 |
| | 3 | 37.35 | *3.54 | *37.70 | 48.89 |
| | 4 | *37.05 | 3.53 | 37.99 | 48.76 |
| | 5 | 46.31 | 38.08 | *3.57 | 38.47 |
| | 6 | 46.51 | *37.25 | 3.55 | *37.52 |
| | 7 | 50.77 | 44.87 | 38.52 | 3.61 |
| | 8 | 51.19 | 46.17 | 38.09 | *3.65 |
| Isolation | | 33.48 | 33.71 | 34.13 | 33.87 |
| Note: Asterisks indicate data used for calculating isolation (unit: dB) | | | | | |

It is evident in the above embodiments and reference example that whereas crosstalk was considerable and isolation reached about 18 dB in an integrated optical waveguide devoid of dummy optical waveguides, an isolation of 30 dB or higher was obtained in all the cases in which dummy optical waveguides were installed. It was learned that an adequate effect could be obtained even with a single dummy optical waveguide and that approximately one to four waveguides were sufficient for practical purposes.

The present invention allows crosstalk in an integrated optical waveguide to be easily reduced to a level at which no practical problems arise. Implementing such an integrated optical waveguide results in much smaller optical waveguide components and makes it much easier to install optical fiber connections, allowing large-scale optical fiber connections to be installed rapidly and inexpensively.

**Claims**

1. An integrated optical waveguide, comprising:
   a plurality of independent optical waveguides formed within a single optically-transparent flat plate, wherein said integrated optical waveguide further comprises dummy optical waveguides disposed between independent adjacent optical waveguides.

2. An integrated optical waveguide as defined in Claim 1, wherein one to four dummy optical waveguides are disposed between the independent adjacent optical waveguides.

3. A method for manufacturing an optical waveguide, comprising the steps of:

exposing an optically-transparent polymer film containing a photopolymerizable monomer to light through a photomask equipped with an optical circuit pattern;

polymerizing the photopolymerizable monomer in the exposed portions; and

removing the unreacted monomer by drying to form an optical circuit, wherein said method for manufacturing an integrated optical waveguide further comprises using as said photomask a photomask equipped with an integrated optical waveguide pattern having the dummy optical waveguide defined in Claim 1.

# FIG.1(a)

# FIG.1(b)

# FIG.1(c)

# FIG.1(d)

# FIG.2

12000

A

250

10

125

125

125

125

1

2

3

4

B          UNIT:μm

# FIG.3

# FIG.4

# FIG.5

# FIG.6

# FIG.7

EP 0 813 077 A2

**FIG.8(a)**    21

**FIG.8(b)**    22 21

**FIG.8(c)**    23 23 23 21

**FIG.8(d)**    24 21 24

13